# EUROPÄISCHE PATENTSCHRIFT

(11) **EP 3 940 949 B1**
(45) Veröffentlichungstag und Bekanntmachung des Hinweises auf die Patenterteilung: **04.06.2025**
(21) Anmeldenummer: 21185344.5
(22) Anmeldetag: 13.07.2021
(51) Int. Cl.: F25B 49/02, H02P 29/024, H02P 21/00

(54) **SYSTEM ZUM STEUERN EINES ELEKTROMOTORS**
SYSTEM FOR CONTROLLING AN ELECTRIC MOTOR
SYSTÈME DE COMMANDE D'UN MOTEUR ÉLECTRIQUE

(30) Priorität: 17.07.2020 DE 102020118991
(43) Veröffentlichungstag der Anmeldung: 19.01.2022
(73) Patentinhaber: Viessmann Holding International GmbH, 35108 Allendorf (Eder) (DE)
(72) Erfinder: STAROBINSKI, Gennadi, 34134 Kassel (DE); GRUBER, Artjom, 34270 Schauenburg (DE); GRUBER, Vitali, 34270 Schauenburg (DE)
(74) Vertreter: MERH-IP Matias Erny Reichl Hoffmann Patentanwälte PartG mbB

(56) Entgegenhaltungen:
- EP-A1- 1 768 251
- EP-A1- 2 763 303
- WO-A1-2013/088832
- US-A1- 2017 302 158

## Beschreibung

Im Zuge der Energiewende kommt dem Elektromotor in besonderem Maße Bedeutung zu. Dabei finden bereits jetzt Elektromotoren in den verschiedensten Bereichen Anwendung. Um den Anforderungen in den jeweiligen Einsatzbereichen gerecht zu werden, insbesondere hinsichtlich einer Drehzahl, eines Drehmoments, der Kosten etc. bietet es sich an, einen Elektromotor bei Bedarf in einem Feldschwächbetrieb zu betreiben.

Mittels eines Feldschwächbetriebs können insbesondere eine Drehzahl und ein Drehmoment des Elektromotors beeinflusst werden. Ein durch eine Erregerspule induziertes magnetisches Feld kann dazu, beispielsweise mittels umschaltbarer Erregerwicklungen, reduziert werden.

Neben der Möglichkeit der Optimierung der Drehzahl und des Drehmoments des Elektromotors hat ein Feldschwächbetrieb den Vorteil, dass bei Asynchronmotoren Motorströme verringert werden können.

Das Betreiben eines Elektromotors im Feldschwächbetrieb erfordert jedoch einiger Sicherheitsmaßnahmen, um den Elektromotor und dessen Ansteuerung vor Schäden bzw. einer Zerstörung, insbesondere bei Vorliegen eines Netzausfalls bzw. einer zu hohen Drehzahl, zu schützen, siehe auch EP 2 763 303 A1 und WO 2013/088832 A1.

Die EP 1 768 251 A1 zeigt eine Notabschaltung zum Schutz gegen Ausfälle, die sich auf die Sicherheit einer Wechselbrücke auswirken, die einen Permanentmagnet-Synchronmotor (PMSM) antreibt. Die Wechselbrücke enthält in einer Brücke verbundene High- und Low-Side-Schalter und wird von einer Gate-Treiberschaltung während des Betriebs des PMSM in einem Feldschwächungsmodus angesteuert, wobei die Gate-Treiberschaltung Stufen zur Ansteuerung der High- und Low-Side-Schalter enthält. Während des normalen Betriebs liefert die Hauptstromversorgung eine Gleichstromversorgung, um den Controller über den Gleichstrombus zu betreiben. Für den Fall des Ausfalls der Hauptstromversorgung liefert eine Reservestromversorgung eine Reservespannung an die Gate-Treiberschaltung, um das Einschalten des Low-Side-Schalters zu ermöglichen und ein Ausschalten jedes der High-Side-Schalter zu bewirken. Infolgedessen werden die Motorklemmen kurzgeschlossen.

Die EP 3 651 353 A1 zeigt dazu, dass ein Inverter-Kontrollgerät die Bewegung einer rotierenden elektrischen Maschine über einen Inverter steuert. Die Steuerung erfolgt über eine Ansteuerschaltung und einen Wechselrichter, die dazu seriell miteinander verbunden sind.

Ausgehend davon ist es Aufgabe der Erfindung, ein verbessertes System zur Steuerung eines Elektromotors zur Verfügung zu stellen.

### Beschreibung

Ein erfindungsgemäßes System zum Steuern eines Elektromotors nach Anspruch 1, umfasst eine Wechselrichterbrücke zum Transformieren elektrischer Energie zur Ansteuerung des Elektromotors. Transformieren kann beispielsweise eine Frequenzanpassung, Spannungstransformation etc. umfassen. Die Wechselrichterbrücke kann dazu eingerichtet sein, eine Wechselspannung und/oder eine Gleichspannung in Wechselspannungen, insbesondere in Wechselspannungen mit verschiedenen Phasenlagen und gleicher Frequenz, zu transformieren. Das Ansteuern kann das Anlegen einer vorgegebenen Spannung, insbesondere einer vorgegebenen Wechselspannung und/oder eines vorgegebenen Stroms, insbesondere eines vorgegebenen Wechselstroms umfassen. In manchen Ausführungsformen kann die Wechselrichterbrücke mit einem Stromversorgungsnetz, beispielsweise einem Gleichspannungsnetz oder einem Wechselspannungsnetz, verbunden sein.

Des Weiteren umfasst das erfindungsgemäße System eine Steuereinheit zum Steuern der Wechselrichterbrücke, eine Sicherheitseinheit zur Überwachung der Ansteuerung des Elektromotors und eine Regeleinheit zum Regeln des Elektromotors mittels der Steuereinheit und der Wechselrichterbrücke. Die Sicherheitseinheit kann beispielsweise dazu eingerichtet sein, einen Generatorbetrieb des Elektromotors zu detektieren, insbesondere bei einem Ausfall der Spannungsversorgung, und diesen mittels der Steuereinheit und der Wechselrichterbrücke zu unterbinden.

Des Weiteren kann die Sicherheitseinheit dazu eingerichtet sein, eine Drehzahl des Elektromotors zu überwachen. Dazu kann beispielsweise eine Drehzahl des Elektromotors beispielsweise mittels eines Sensors ermittelt werden. Die Sicherheitseinheit kann beispielsweise eine Vergleichseinheit zum Vergleichen der ermittelten Drehzahl mit einer vorgegebenen maximalen Drehzahl umfassen.

Die Sicherheitseinheit kann dazu eingerichtet sein, wenn die ermittelte Drehzahl die vorgegebene maximale Drehzahl übersteigt, den Elektromotor mittels der Steuereinheit und der Wechselrichterbrücke in einen vorgegebenen Betriebszustand zu bringen.

Beispiele für einen vorgegebenen Zustand des Elektromotors sind ein normaler Betrieb ohne Feldschwächbetrieb, ein Feldschwächbetrieb mit einem vorgegebenen Feldschwächfaktor, ein Bremsbetrieb, bei dem die Drehzahl des Elektromotors durch mechanische Reibung und/oder magnetische Ströme reduziert wird (insbesondere mittels Kurzschluss), ein Betrieb mit einer vorgegebenen Drehzahl, ein Stillstand, eine Entkopplung des Elektromotors von der Wechselrichterbrücke durch geöffnete Schalter etc.

Eine Überwachung kann eine Detektion eines Verlassens eines oder mehrerer vorgegebener Arbeitsbereiche, beispielsweise einer oder mehrerer Einheiten des Systems, und eine Rückführung in einen vorgegebenen Arbeitsbereich der einen oder mehreren Arbeitsbereiche umfassen.

Eine Überwachung kann eine durch ständige Beobachtung erfolgte Kontrolle umfassen.

In manchen Ausführungsformen kann die Sicherheitseinheit dazu eingerichtet sein, insbesondere mittels Sensoren, eine Temperatur des Elektromotors zu überwachen. Dazu kann die Sicherheitseinheit dazu eingerichtet sein, Sensorwerte mit Temperaturreferenzwerten zu vergleichen und, wenn die Sensorwerte die Temperaturreferenzwerte übersteigen, den Elektromotor mittels der Steuereinheit und der Wechselrichterbrücke in einen vorgegebenen Betriebszustand (Zustand) zu bringen.

Die Steuereinheit kann beispielsweise eine analoge und/oder digitale Schaltung, insbesondere einen FPGA, einen Mikrokontroller etc. umfassen. Die Regeleinheit kann beispielsweise eine analoge und/oder digitale Schaltung, insbesondere einen FPGA, einen Mikrokontroller etc. umfassen. Die Sicherheitseinheit kann beispielsweise eine analoge und/oder digitale Schaltung, insbesondere einen FPGA, einen Mikrokontroller etc. umfassen.

Zur Signalübertragung sind die Regeleinheit mit der Steuereinheit und die Sicherheitseinheit mit der Steuereinheit verbunden. Die Signalübertragung kann beispielsweise über Funk und/oder leitungsgebunden erfolgen.

Die Regeleinheit kann dazu eingerichtet sein, den Elektromotor mittels der Steuereinheit und der Wechselrichter beispielsweise zur Erreichung von Regelzielen, gemäß Benutzervorgaben etc., zu steuern. Die Steuereinheit kann dazu eingerichtet sein, wenn eine Steuerung des Elektromotors durch die Regeleinheit im Widerspruch zu einer Steuerung durch die Sicherheitseinheit steht, den Elektromotor mittels der Wechselrichterbrücke gemäß der Steuerung der Sicherheitseinheit zu steuern.

Erfindungsgemäß überwacht die Sicherheitseinheit die Ansteuerung des Elektromotors unabhängig von der Regeleinheit. Dadurch kann sichergestellt werden, dass der Elektromotor und/oder eine Steuerschaltung (beispielsweise die Wechselrichterbrücke, die Steuereinheit etc.) bei einem Ausfall der Regeleinheit und/oder bei einer fehlerhaften Steuerung des Elektromotors durch die Regeleinheit vor Schäden und/oder einer Zerstörung geschützt sind.

Ein weiterer Vorteil des erfindungsgemäßen Systems ist, dass die Regeleinheit auf einfache Art und Weise hinsichtlich der Funktionsweise, beispielsweise hinsichtlich der Regelziele, der Regelalgorithmen, der Benutzereingaben angepasst werden kann, ohne dass eine Überprüfung bezüglich Fehler und/oder bezüglich einer Fehleranfälligkeit etc. notwendig ist, da der Betrieb des Elektromotor durch die Sicherheitseinheit unabhängig von der Regeleinheit überwacht wird.

Dadurch kann das System besonders kostengünstig und mit niedrigem Aufwand flexibel hinsichtlich der Regelalgorithmen, der Regelparameter etc. angepasst werden.

In einer besonders flexiblen Ausführungsform der Erfindung kann die Steuereinheit dazu eingerichtet sein, den Elektromotor in einem Feldschwächbetrieb zu betreiben, und/oder der Elektromotor dazu eingerichtet sein, in einem Feldschwächbetrieb betrieben zu werden.

Dadurch können ein Frequenzbereich und ein Drehmoment des Elektromotors besonders kostengünstig an einen Bedarf angepasst werden. Ein weiterer Vorteil ist, dass dadurch ein Energieverbrauch seitens des Elektromotors reduziert werden kann.

In Ausführungsformen mit einem besonders hohen Sicherheitsaspekt kann die Sicherheitseinheit dazu eingerichtet sein, einen Ausfall einer Netzspannung während eines Feldschwächbetriebs des Elektromotors als Fehler zu detektieren, und/oder die Sicherheitseinheit eine Schnittstelle zur Übertragung von Fehlersignalen umfassen, wobei die Sicherheitseinheit dazu eingerichtet sein kann, bei Vorliegen eines Fehlers den Elektromotor mittels der Wechselrichterbrücke durch Übertragen und/oder Nichtübertragen eines Signals an die Steuereinheit in einen vorgegebenen Zustand zu versetzen.

Weitere Beispiele für einen Fehler sind ein Überschreiten einer vorgegebenen maximalen Drehzahl durch den Elektromotor, ein Übersteigen einer Temperatur des Elektromotors über einen vorgegebenen Temperaturreferenzwert, eine mechanische Last am Elektromotor über einen vorgegebenen Wert etc.

Vorteilhafterweise kann die Steuereinheit dazu eingerichtet sein, mittels Pulsweitenmodulation (PWM) die Wechselrichterbrücke und somit den Elektromotor zu steuern. In manchen Ausführungsformen kann die Regeleinheit dazu eingerichtet sein, ein pulsweitenmoduliertes Signal an die Steuereinheit zu übertragen, und die Steuereinheit dazu eingerichtet sein, in Abhängigkeit eines Signals der Sicherheitseinheit die Wechselrichterbrücke gemäß dem pulsweitenmodulierten Signal anzusteuern.

In einer besonders flexiblen Ausführungsform kann die Sicherheitseinheit dazu eingerichtet sein, Signale eines mit der Sicherheitseinheit verbundenen Sensors zu analysieren, basierend auf der Analyse einen Fehler zu detektieren und bei Vorliegen eines Fehlers den Elektromotor mittels der Wechselrichterbrücke durch Übertragen und/oder Nichtübertragen eines Signals an die Steuereinheit in einen vorgegebenen Zustand zu versetzen.

Dies hat den Vorteil, dass mittels der Sicherheitseinheit zur Überwachung der Ansteuerung des Elektromotors auf effiziente Weise weitere Komponenten, Parameter etc., die insbesondere in Verbindung und/oder Wechselwirkung mit dem Elektromotor stehen, überwacht werden können. Dadurch kann auf eine gesonderte Systemüberwachung verzichtet werden. Des Weiteren können dadurch die weiteren Komponenten auf einfache Art und Weise angesteuert werden, da eine Überwachung der Ansteuerung durch die Sicherheitseinheit erfolgt.

Eine Analyse kann beispielsweise ein Vergleichen des Sensorsignals mit einem Referenzwert umfassen. In manchen Ausführungsformen kann eine Analyse ein detektieren von einem oder mehreren Mustern im Sensorsignal umfassen.

In besonders angepassten Ausführungsformen kann ein vorgegebener Zustand aus mehreren vorgegebenen Zuständen in Abhängigkeit eines oder mehrerer detektierter Fehler und/oder in Abhängigkeit der Steuersignale der Regeleinheit durch die Sicherheitseinheit gewählt werden.

Dies kann den Vorteil haben, dass dadurch in besonderem Maße einem Fehler entgegengewirkt werden kann und eine Regelung des Elektromotors durch die Regeleinheit möglichst geringfügig eingeschränkt wird.

In besonders vorteilhaften Ausführungsformen kann das System einen Elektromotor in Form eines Kompressors einer Wärmepumpe umfassen und/oder kann das System eine Wärmepumpe sein. Ein Kompressor einer Wärmepumpe kann dazu eingerichtet sein, ein Gas/ eine Flüssigkeit zu verdichten. Der Kompressor kann einen Elektromotor umfassen. Eine Wärmepumpe ist eine Maschine, die unter Aufwendung von technischer Arbeit, beispielsweise mittels eines Kompressors, thermische Energie aus einem Reservoir mit niedrigerer Temperatur (in der Regel ist das die Umgebung) aufnimmt und - zusammen mit der Antriebsenergie - als Nutzwärme auf ein zu beheizendes System mit höherer Temperatur (Raumheizung) überträgt.

Dies kann den Vorteil haben, dass eine Wärmepumpe besonders effizient, indem beispielsweise der Elektromotor als Teil des Kompressors in einem Feldschwächbetrieb betrieben wird, sein kann. Ein weiterer Vorteil kann sein, dass eine Regelung der Regeleinheit der Wärmepumpe bzw. des Kompressors mit geringem Aufwand an Änderungen, insbesondere hinsichtlich eines Regelalgorithmus, der Regelziele etc. angepasst werden kann, da eine Überwachung der Wärmepumpe bzw. des Kompressors der Wärmepumpe durch die Sicherheitseinheit unabhängig der Regeleinheit erfolgt.

Des Weiteren können dadurch die Kosten für die Entwicklung der Regeleinheit reduziert werden.

Das Betreiben der Wärmepumpe in einem Feldschwächbetrieb kann zusätzlich den Vorteil haben, dass eine Drehzahl bei konstanter elektrischer Leistungsaufnahme erhöht werden kann.

In besonders integrierten Ausführungsformen können ein oder mehrere Drucksensoren an einem Kältekreis der Wärmepumpe zur Drucküberwachung im Kältekreis (insbesondere an einer Rohr-/Schlaucheinheit der Wärmepumpe) und/oder ein Temperatursensor am Kompressor der Wärmepumpe zur Temperaturüberwachung des Kompressors angeordnet und mit der Sicherheitseinheit zur Signalübertragung verbunden sein.

Dies kann den Vorteil haben, dass eine Überwachung der Wärmepumpe bezüglich des Drucks und/oder der Temperatur auf einfache und effiziente Weise ausgeführt werden kann. Da bei dieser Ausführungsform ein sicherheitsrelevanter Teil umfassend den Kompressor (Elektromotor), die Wechselrichterbrücke, die Steuereinheit und die Sicherheitseinheit von der Regeleinheit entkoppelt ist, kann eine Regelung der Wärmepumpe mittels der Regeleinheit besonders einfach hinsichtlich Regelparameter, Regelalgorithmen, Einsatzbereiche der Wärmepumpe etc. angepasst werden, ohne dass aufwändige Sicherheitsmaßnahmen, wie eine Sicherheitszertifizierung der Regeleinheit etc., notwendig sind. Dadurch kann die Wärmepumpe besonders flexibel eingesetzt und angepasst werden.

Ein weiterer Vorteil ist, dass die Wärmepumpe hinsichtlich Druck und Temperatur besonders effizient und kostengünstig überwacht werden kann, während mit einem Feldschwächbetrieb des Elektromotors (des Kompressors) ein besonders flexibler Einsatz der Wärmepumpe ermöglicht wird.

In besonders kompakten Ausführungsformen kann das System eine Recheneinheit umfassen und können die Steuereinheit, die Sicherheitseinheit und/oder die Regeleinheit jeweils mittels eines Rechenkerns der Recheneinheit ausgeführt werden.

Eine Recheneinheit kann beispielsweise ein Mikrokontroller, ein FPGA (Field Programmable Gate Array), ein ASIC (Application-Specific Integrated Circuit), eine integrierte Schaltung etc. sein.

Bei einem Rechenkern handelt es sich beispielsweise um eine (weitgehend) vollständige, weitgehend von anderen Rechenkernen unabhängige Recheneinheit inklusive eigener Registersätze und arithmetisch-logischer Einheiten (ALU). Vorzugsweise sind mehrere Rechenkerne in einer Recheneinheit mit gemeinsamen Anschlüssen und Speichern angeordnet.

Dies hat den Vorteil, dass eine Überwachung durch die Sicherheitseinheit unabhängig der Regeleinheit erfolgen kann, während die Steuereinheit, die Sicherheitseinheit und/oder die Regeleinheit besonders kompakt und kostensparend mittels einer Recheneinheit ausgeführt werden.

In manchen Ausführungsformen können die Sicherheitseinheit und die Steuereinheit als eine Einheit ausgeführt sein, die einem vorgegebenen Sicherheitsstandard, insbesondere hinsichtlich der Überwachung der Ansteuerung des Elektromotors und/oder einer Überwachung der Wärmepumpe, entspricht. Entsprechend können die Sicherheitseinheit und die Steuereinheit gemeinsam mittels eines Rechenkerns einer Recheneinheit ausgeführt werden.

In einer besonders vorteilhaften Ausführungsform können die Steuereinheit, die Sicherheitseinheit und die Regeleinheit mittels einer Recheneinheit implementiert sein, kann die Recheneinheit drei Rechenkerne umfassen, wobei die Steuereinheit, die Sicherheitseinheit und die Regeleinheit jeweils mittels eines Rechenkerns der Recheneinheit ausgeführt werden.

Dies hat den Vorteil, dass Vorgaben hinsichtlich der Sicherheit des Elektromotors und/oder der Wärmepumpe besonders anschaulich und nachvollziehbar eingehalten werden können. Dadurch kann eine entsprechende Sicherheitsüberprüfung besonders effizient und einfach durchgeführt werden.

In einer besonders integrierten Ausführungsform können die Steuereinheit, die Sicherheitseinheit und die Regeleinheit mittels einer Recheneinheit implementiert sein und kann die Recheneinheit zwei Rechenkerne umfassen, wobei die Regeleinheit mittels eines ersten Rechenkerns der Recheneinheit ausgeführt wird und die Steuereinheit und die Sicherheitseinheit gemeinsam mittels eines zweiten Rechenkerns der Recheneinheit ausgeführt werden.

Dies hat den Vorteil, dass die Sicherheitseinheit und die Steuereinheit besonders ressourcenschonend bezüglich eines Energieverbrauchs und der Anzahl der Rechenkerne ausgeführt werden. Dadurch können wiederum die Kosten während des Betriebs sowie für die Herstellung gesenkt werden.

In einer besonders robusten Ausführungsform kann die Steuereinheit eine Logikschaltung umfassen. Dies hat den Vorteil, dass die Steuereinheit besonders ausfallsicher gegenüber Programmierfehlern ist. Des Weiteren kann dadurch die Komplexität der Steuereinheit reduziert und somit die Implementierung der Steuereinheit vereinfacht werden.

### Beschreibung der Zeichnung

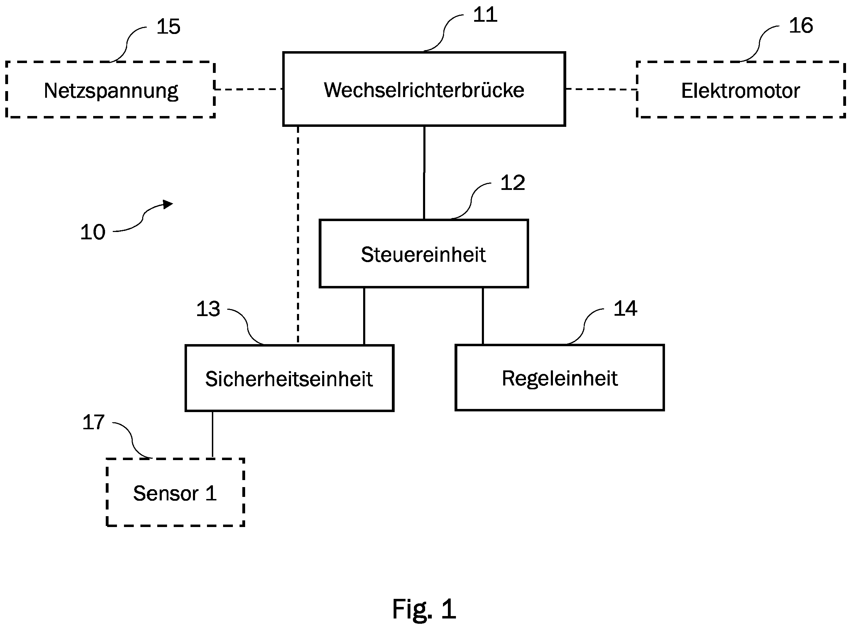

Figur 1 zeigt schematisch ein System zum Steuern eines Elektromotors gemäß einer Ausführungsform der Erfindung. Das System 10 umfasst eine Wechselrichterbrücke 11, eine Steuereinheit 12, eine Sicherheitseinheit 13 und eine Regeleinheit 14. Die Wechselrichterbrücke 11 ist dazu eingerichtet, elektrische Energie, die beispielsweise durch eine Netzspannung 15 zur Verfügung gestellt wird, in Abhängigkeit einer Steuerung durch die Steuereinheit 12 einem Elektromotor 16 zur Verfügung zu stellen.

Die Steuereinheit 12 kann dazu eingerichtet sein, die Wechselrichterbrücke 11 in Abhängigkeit von Signalen von der Sicherheitseinheit 13 und von Signalen von der Regeleinheit 14 zu steuern. Vorteilhafterweise kann die Steuereinheit dazu eingerichtet sein, die Signale der Sicherheitseinheit 13 und der Regeleinheit 14 so zu behandeln, dass die Steuersignale (Signale) der Sicherheitseinheit 13 gegenüber den Steuersignalen (Signale) der Regeleinheit 14 für die Steuerung der Wechselrichterbrücke durch die Steuereinheit 12 dominant sind.

Die Sicherheitseinheit 13 ist dazu eingerichtet, eine Ansteuerung des Elektromotors 16 zu überwachen.

In manchen Ausführungsformen kann die Sicherheitseinheit 13 mit der Wechselrichterbrücke 11 verbunden sein, sodass die Sicherheitseinheit eine Energiezufuhr von der Wechselrichterbrücke zum Elektromotor 16 (Ansteuerung) überwachen kann. Dies kann beispielsweise die Detektion eines Motorbetriebs und/oder eines Generatorbetriebs des Elektromotors 16 umfassen. Basierend auf der Detektion, ob der Elektromotor in einem Motorbetrieb oder in einem Generatorbetrieb betrieben wird, kann die Sicherheitseinheit den Betriebszustand als Fehler detektieren und ein entsprechendes Signal an die Steuereinheit übermitteln. Basierend auf dem Signal (Steuersignal) der Sicherheitseinheit an die Steuereinheit kann die Steuereinheit die Wechselrichterbrücke so ansteuern, dass der Elektromotor in einen vorgegebenen Zustand überführt (gebracht) wird.

Des Weiteren kann die Sicherheitseinheit beispielsweise mit einem Sensor 17 verbunden sein. Der Sensor kann beispielsweise der Sicherheitseinheit 13 ein Signal in Abhängigkeit einer Motordrehzahl des Elektromotors 16, in Abhängigkeit einer Temperatur des Elektromotors 16 etc. zur Verfügung stellen. Die Sicherheitseinheit kann dabei dazu eingerichtet sein, das Sensorsignal zu analysieren und basierend auf der Analyse einen Fehler zu detektieren. Das Analysieren des Sensorsignals kann beispielsweise ein Vergleichen des Sensorsignals mit einem Referenzsignal umfassen.

Beispiele für einen vorgegebenen Zustand des Elektromotors sind ein normaler Betrieb ohne Feldschwächbetrieb, ein Feldschwächbetrieb mit einem vorgegebenen Feldschwächfaktor, ein Bremsbetrieb, bei dem die Drehzahl des Elektromotors durch mechanische Reibung und/oder magnetische Ströme reduziert wird (insbesondere mittels Kurzschluss), ein Betrieb mit einer vorgegebenen Drehzahl, ein Stillstand, eine Entkopplung des Elektromotors von der Wechselrichterbrücke durch geöffnete Schalter etc.

Vorteilhafterweise kann die Regeleinheit 14 dazu eingerichtet sein, basierend auf einem vorgegebenen Regelziel ein Signal (Steuersignal) an die Steuereinheit zu übertragen, sodass eine minimale Regeldifferenz zwischen Regelziel und Regelgröße erreicht wird. In manchen Ausführungsformen kann die Regeleinheit 14 mit einem oder mehreren Sensoren 17 zum Detektieren von Regelgrößen verbunden sein. Wie in Figur 1 ersichtlich, überwacht die Sicherheitseinheit 13 die Ansteuerung des Elektromotors 16 unabhängig von der Regeleinheit 14.

In manchen Ausführungsformen können sich die Sicherheitseinheit 13 und die Regeleinheit 14 Sensoren teilen, sodass ein Sensorsignal sowohl von der Sicherheitseinheit 13 als auch von der Regeleinheit 14 verwendet wird. Vorteilhafterweise kann dabei das Sensorsignal seitens der Sicherheitseinheit an die Regeleinheit weitergeleitet werden, sodass die Regeleinheit von der Sicherheitseinheit abhängig sein kann, die Sicherheitseinheit aber nicht von der Regeleinheit abhängig ist. In manchen Ausführungsformen kann dabei ein Sensor zur Übertragung von Sensorsignalen parallel sowohl mit der Sicherheitseinheit als auch mit der Regeleinheit verbunden sein.

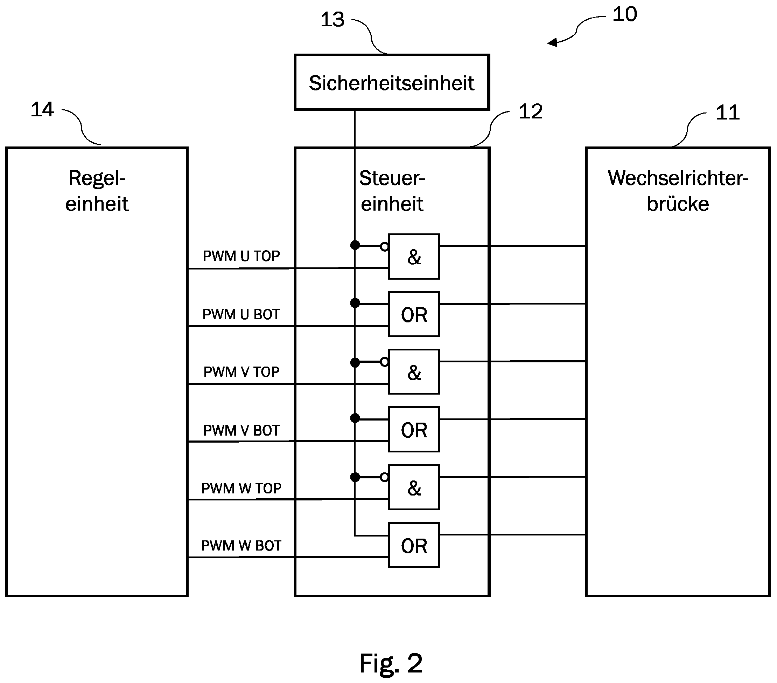

Figur 2 zeigt schematisch ein System zum Steuern eines Elektromotors gemäß einer Ausführungsform der Erfindung. Das System 10 umfasst analog zu Figur 1 eine Wechselrichterbrücke 11, eine Steuereinheit 12, eine Sicherheitseinheit 13 und eine Regeleinheit 14.

Analog zu Figur 1 kann die Wechselrichterbrücke 11 mit einer Netzspannung 15 und/oder einem Elektromotor 16 verbunden sein. Die Sicherheitseinheit 13 kann beispielsweise mit der Wechselrichterbrücke 11 und/oder mit einem oder mehreren Sensoren 17 zur Überwachung der Ansteuerung des Elektromotors 16 verbunden sein.

In dieser Ausführungsform umfasst die Steuereinheit Logikbausteine, wie "UND"- und "ODER"-Gatter. Mittels dieser Logikschaltungen ist die Sicherheitseinheit 13 dazu eingerichtet, durch Übertragen bzw. Nicht-Übertragen eines Signals an die Steuereinheit den Elektromotor mittels der Wechselrichterbrücke in einen vorgegebenen Zustand zu versetzen.

In dieser Ausführungsform umfasst die Regeleinheit 14 sechs Signalausgänge PWM U TOP, PWM U BOT, PWM V TOP, PWM V BOT, PWM W TOP, PWM W BOT, die mit der Steuereinheit verbunden sind. Die Signale an den sechs Signalausgängen können vorteilhafterweise pulsweitenmoduliert sein. Zwei Signalausgänge BOT, TOP bilden jeweils ein Signalpaar PWM U, PWM V, PWM W für die Ansteuerung des Elektromotors. Bei Vorliegen eines TOP-Signals kann in der Wechselrichterbrücke eine Phase U, V, W des Elektromotors mit einem ersten, hohen Potential einer Versorgungsspannung verbunden werden. Bei Vorliegen eines BOT Signals kann in der Wechselrichterbrücke eine Phase U, V, W des Elektromotors mit einem zweiten, niedrigen Potential verbunden werden. Vorteilhafterweise liegt entweder nur an einem Signalausgang TOP oder BOT der Signalpaare ein Signal an, um einen Kurzschluss zwischen erstem, hohem und zweitem, niedrigem Potential zu vermeiden. In manchen Ausführungsformen können die Signalausgänge eines Signalpaars zu einem Signalausgang zusammengefasst sein.

In manchen Ausführungsformen kann ein vorgegebenes Potential durch vorliegen eines TOP und eines BOT Signals durch die Wechselrichterbrücke erzeugt werden.

Wie in Figur 2 gezeigt, ist ein TOP Signalausgang jeweils mit einem Signaleingang eines UND-Gatters der Steuereinheit und ein BOT Signalausgang jeweils mit einem Signaleingang eines ODER-Gatters der Steuereinheit verbunden.

Ein weiterer Signaleingang der UND-Gatter ist in invertierter Weise mit einem Signalausgang der Sicherheitseinheit 13 verbunden. Ein weiterer Signaleingang der ODER-Gatter ist ebenfalls mit dem Signalausgang der Sicherheitseinheit 13 verbunden.

Die Steuereinheit 12, wie in Figur 2 gezeigt, ist dazu eingerichtet, mittels der Signalausgänge der UND- und ODER-Gatter die Wechselrichterbrücke 11 zu steuern.

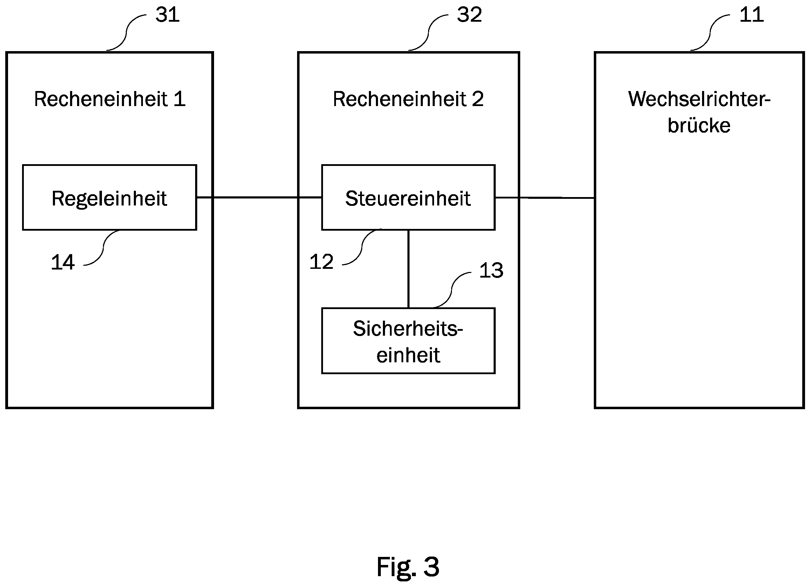

Figur 3 zeigt schematisch eine Implementierung des Systems gemäß einer Ausführungsform der Erfindung. In der in Figur 3 gezeigten Implementierung wird die Regeleinheit 14 beispielsweise mittels einer ersten Recheneinheit 31 ausgeführt und die Steuereinheit 12 und die Sicherheitseinheit 13 mittels einer zweiten Recheneinheit 32 ausgeführt. Dies hat den Vorteil, dass die sicherheitsrelevanten Einheiten, die Steuereinheit und die Sicherheitseinheit von der nichtsicherheitsrelevanten Regeleinheit 14 hinsichtlich der Ausführung entkoppelt sind. Dadurch kann sichergestellt werden, dass ein Ausfall der ersten Recheneinheit 31 aufgrund eines Programmierfehlers der Regeleinheit 14 die Funktionsweise der Sicherheitseinheit, der Steuereinheit und der Wechselrichterbrücke nicht beeinträchtigt. Als Folge kann dadurch eine Beschädigung des Systems zur Ansteuerung des Elektromotors durch den Elektromotor aufgrund eines Ausfalls der Regeleinheit 14 vermieden werden.

Ein weiterer Vorteil dieser Ausführungsform ist, dass die Anzahl der Recheneinheiten reduziert werden kann, ohne die Sicherheit der Ansteuerung zu verringern.

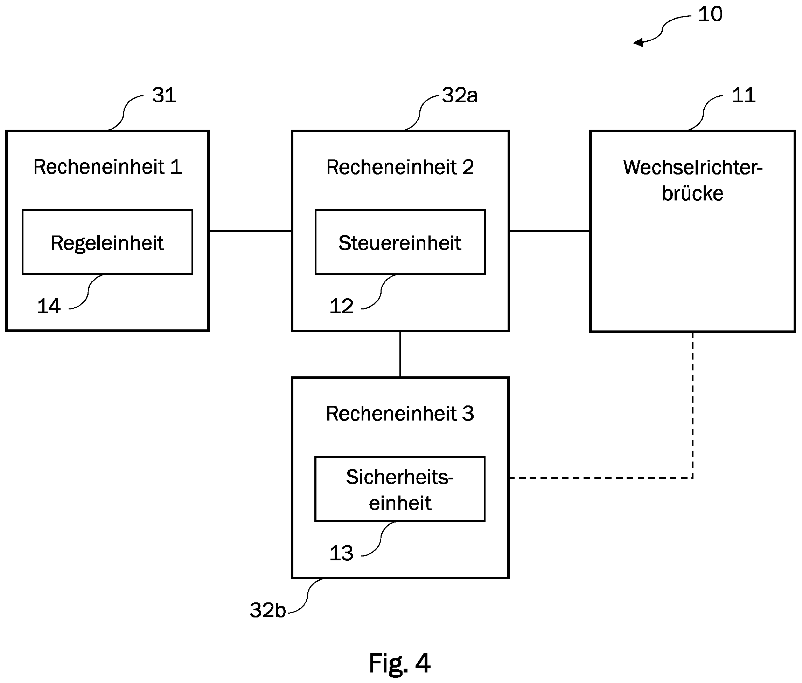

Figur 4 zeigt schematisch eine Implementierung eines Systems zum Steuern eines Elektromotors gemäß einer Ausführungsform der Erfindung. In dieser Ausführungsform werden die Regeleinheit 14, die Steuereinheit 12 und die Sicherheitseinheit 13 jeweils durch eine Recheneinheit 31, 32a, 32b ausgeführt. Diese Ausführungsform hat den Vorteil, dass die Einheiten hinsichtlich ihrer Ausführung voneinander getrennt sind, sodass eine einfache, übersichtliche und strukturierte Implementierung der Regeleinheit, der Steuereinheit und der Sicherheitseinheit gefördert wird.

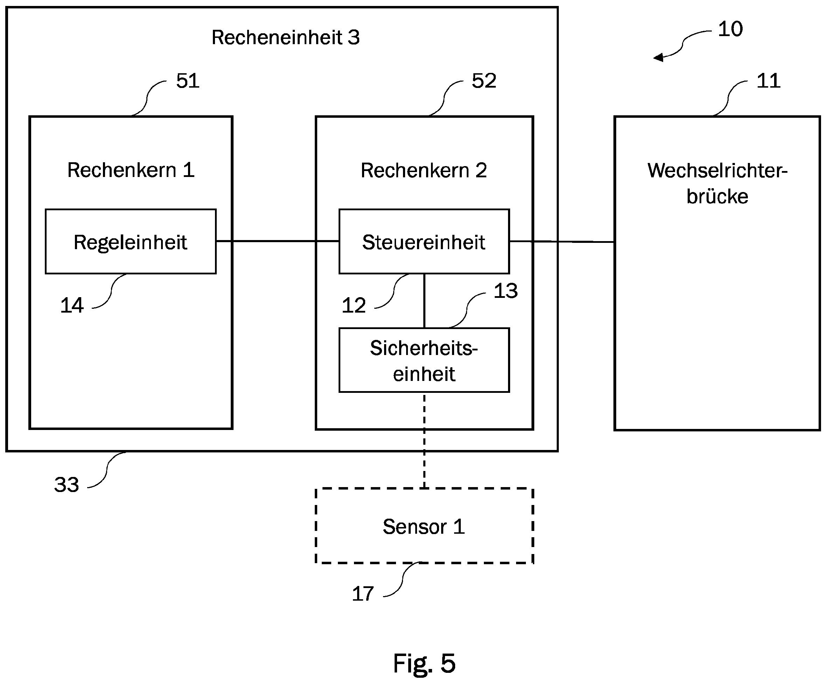

Figur 5 zeigt schematisch eine Implementierung eines Systems zum Steuern eines Elektromotors gemäß einer Ausführungsform der Erfindung. In der in Figur 5 gezeigten Implementierung des Systems 10 werden die Regeleinheit, die Steuereinheit und die Sicherheitseinheit mittels einer Recheneinheit 33 ausgeführt. Die Recheneinheit umfasst in dieser Ausführungsform zwei Rechenkerne 51, 52, wobei die Regeleinheit mittels eines ersten Rechenkerns 51 und die Steuereinheit und die Sicherheitseinheit mittels eines zweiten Rechenkerns 52 ausgeführt werden. In manchen Ausführungsformen kann die Steuereinheit 12 mittels eines zweiten Rechenkerns und die Sicherheitseinheit 13 mittels eines dritten Rechenkerns ausgeführt werden.

Die in Figur 5 gezeigte Implementierung des erfindungsgemäßen Systems kann den Vorteil haben, dass auf einfache und kostengünstige Weise ein sicherheitsrelevanter Teil, umfassend die Steuereinheit und die Sicherheitseinheit, von einem nichtsicherheitsrelevanten Teil, der Regeleinheit 14, separiert werden kann. Dadurch können besonders effizient Sicherheitsanforderungen an das System zur Steuerung eines Elektromotors erfüllt werden.

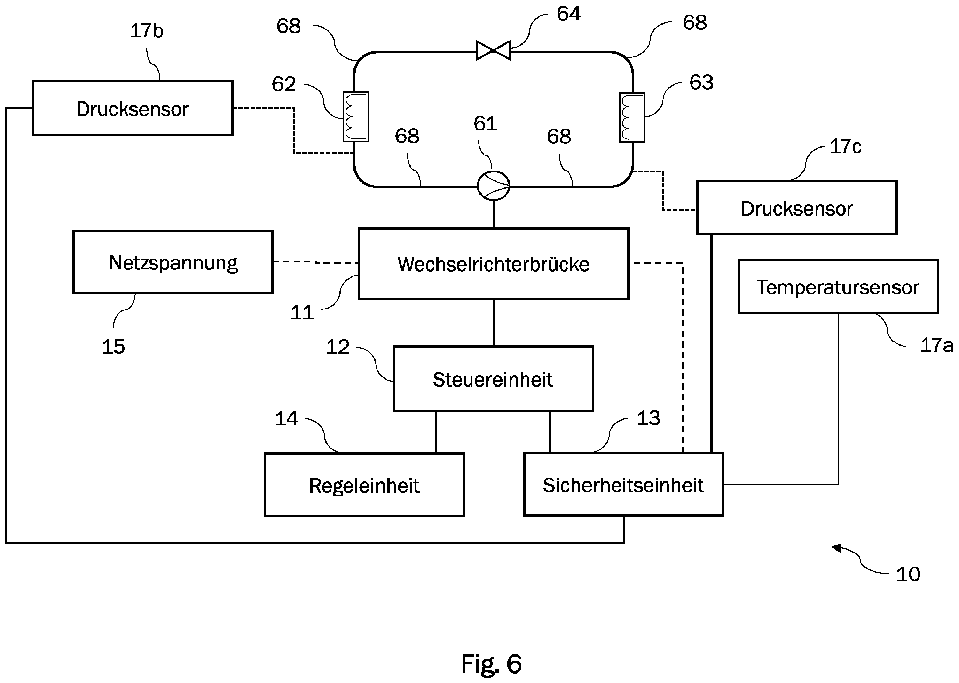

Figur 6 zeigt schematisch ein System zum Steuern eines Elektromotors gemäß einer Ausführungsform der Erfindung. In dieser Ausführungsform ist der Elektromotor Teil eines Kompressors 61. Der Kompressor 61, eine Wärmequelle 62, ein Wärmeabnehmer 63 und ein Kompressionsventil 64 können Teil einer Wärmepumpe sein. Die Wärmequelle 62, der Kompressor 61, der Wärmeabnehmer 63 und das Expressionsventil 64 sind dabei zu einem Flüssigkeits- und/oder Gastransport, insbesondere eines Kältemittels, miteinander verbunden. Dazu kann das System beispielsweise eine Schlauch- und/oder Rohreinheit 68 umfassen. An der Schlauch- bzw. Rohreinheit 68 können ein oder mehrere Drucksensoren 17b, 17c an verschiedenen Stellen zur Überwachung der Wärmepumpe angebracht sein.

An dem Kompressor 61 kann beispielsweise ein Temperatursensor 17a zur Temperaturüberwachung des im Kompressor 61 angeordneten Elektromotors angeordnet sein.

Wie in Figur 6 gezeigt, können die Sensoren 17a, 17b, 17c vorteilhafterweise mit der Sicherheitseinheit verbunden sein. Die Sicherheitseinheit kann dazu eingerichtet sein, in Abhängigkeit eines oder mehrerer Sensorwerte, beispielsweise durch Vergleichen eines oder mehrerer Sensorwerte mit einem oder mehreren Referenzwerten, das Vorliegen eines Fehlers zu detektieren und in Abhängigkeit des Fehlers durch Übertragen und/oder Nichtübertragen eines Signals an die Steuereinheit den Elektromotor des Kompressors mittels der Wechselrichterbrücke in einen vorgegebenen Zustand zu versetzen.

Mögliche Fehler sind beispielsweise ein Über- oder Unterdruck in der Rohr- bzw. Schlaucheinheit 68, eine zu hohe oder zu niedrige Temperatur in der Rohr- bzw. Schlaucheinheit 68, ein Überhitzen des Kompressors 61, insbesondere des Elektromotors im Kompressor 61, ein Stromausfall, insbesondere wenn der Elektromotor des Kompressors 61 in einem Feldschwächbetrieb betrieben wird, etc.

Beispiele für einen vorgegebenen Zustand des Elektromotors bzw. des Kompressors sind ein normaler Betrieb ohne Feldschwächbetrieb, ein Feldschwächbetrieb mit einem vorgegebenen Feldschwächfaktor, ein Bremsbetrieb, bei dem die Drehzahl des Elektromotors durch mechanische Reibung und/oder magnetische Ströme reduziert wird (insbesondere mittels Kurzschlusses des Elektromotors), ein Betrieb mit einer vorgegebenen Drehzahl, ein Stillstand, eine Entkopplung des Elektromotors von der Wechselrichterbrücke durch geöffnete Schalter, ein Normalbetrieb mit reduzierter Drehzahl etc.

Dies hat den Vorteil, dass auf einfache und kostengünstige Art und Weise eine Wärmepumpe überwacht und gleichzeitig ein Elektromotor zum Betreiben des Kompressors der Wärmepumpe in einem Feldschwächbetrieb mit der erforderlichen Überwachung betrieben werden kann. Des Weiteren kann dabei die Regeleinheit auf einfache und kostengünstige Weise implementiert und bei Bedarf aktualisiert werden, da die Regeleinheit im Gegensatz zu der Sicherheitseinheit und der Steuereinheit keinen bzw. geringeren sicherheitsrelevanten Anforderungen unterliegt.

In Folge dessen kann eine Wärmepumpe besonders effizient von der Regeleinheit gesteuert werden und der Elektromotor des Kompressors kann in einem Feldschwächbetrieb betrieben werden. Dies hat zur Folge, dass der Strombedarf verringert werden kann.

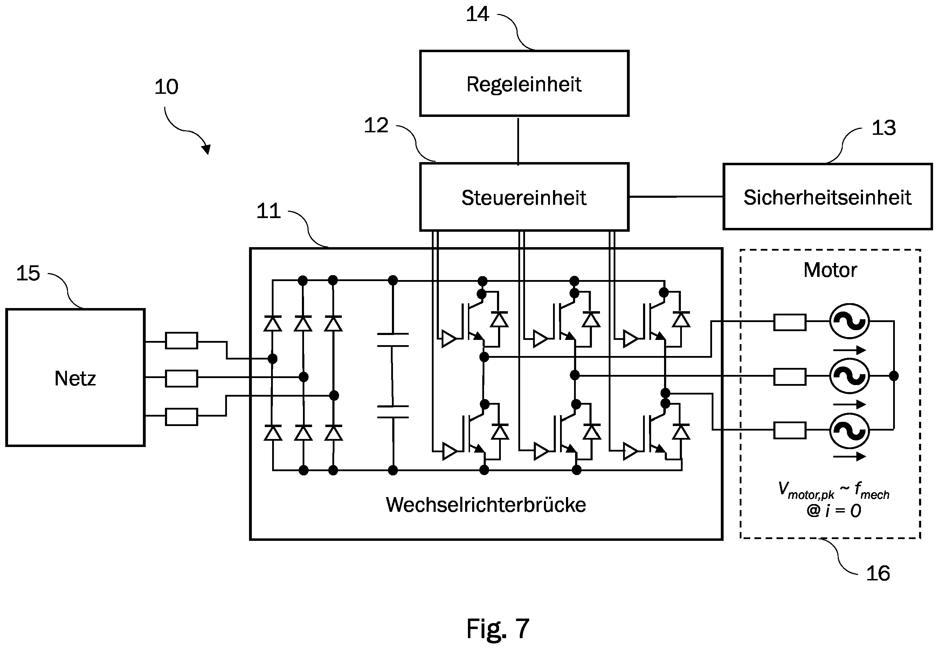

Figur 7 zeigt schematisch ein System zum Steuern eines Elektromotors gemäß einer Ausführungsform der Erfindung. In dem in Figur 7 gezeigten System 10 ist eine Wechselrichterbrücke 11 detailliert gezeigt.

In dieser Ausführungsform umfasst die Wechselrichterbrücke an den Netzanschlüssen (drei Phasen) Dioden zum Gleichrichten einer durch das Netz 15 zur Verfügung gestellten Wechselspannung. Zusätzlich sind in dieser Ausführungsform der Diodenschaltung zum weiteren Glätten der erzeugten Gleichspannung Kapazitäten parallel geschaltet. Mittels sechs Transistoren wird die Gleichspannung in eine Wechselspannung mit vorgegebener Frequenz und Amplitude umgewandelt, mittels der ein Elektromotor 16 angesteuert wird. Die Transistoren der Wechselrichterbrücke 11 zum Erzeugen der Wechselspannung werden durch die Steuereinheit 12 geschaltet.

Die Steuereinheit 12 steuert die Wechselrichterbrücke wiederum in Abhängigkeit von durch die Regeleinheit 14 und durch die Sicherheitseinheit 13 bereitgestellten Signalen. Vorteilhafterweise sind dabei die Signale der Sicherheitseinheit 13 gegenüber den Signalen der Regeleinheit 14 dominierend.

Vorteilhafterweise kann die Steuereinheit 12 die Wechselrichterbrücke 11 mittels pulsweitenmodulierter Signale zur Ansteuerung des Elektromotors steuern.

Die in den Figuren 1 bis 7 gezeigten Systeme und die in der Beschreibung zusätzlich genannten Ausführungsformen können in manchen Ausführungsformen hinsichtlich ihrer Merkmale kombiniert werden, falls diese nicht kontrahierend zueinander sind.

## Patentansprüche

1. System (10) zum Steuern eines Elektromotors, wobei das System (10) einen Elektromotor (16) in Form eines Kompressors (61) einer Wärmepumpe beinhaltet und/oder das System eine Wärmepumpe ist, umfassend:
- eine Wechselrichterbrücke (11) zum Transformieren elektrischer Energie zur Ansteuerung des Elektromotors (16),
- eine Steuereinheit (12) zum Steuern der Wechselrichterbrücke (11),
- eine Sicherheitseinheit (13) zur Überwachung der Ansteuerung des Elektromotors (16),
- eine Regeleinheit (14) zum Regeln des Elektromotors (16) mittels der Steuereinheit (12) und der Wechselrichterbrücke (11),
wobei zur Signalübertragung die Regeleinheit (14) mit der Steuereinheit (12) und die Sicherheitseinheit (13) mit der Steuereinheit (12) verbunden sind,
die Sicherheitseinheit (13) die Ansteuerung des Elektromotors (16) unabhängig von der Regeleinheit (14) überwacht,
die Steuereinheit (12) dazu eingerichtet ist, den Elektromotor (16) in einem Feldschwächbetrieb zu betreiben, und/oder der Elektromotor (16) dazu eingerichtet ist, in einem Feldschwächbetrieb betrieben zu werden,
ein oder mehrere Drucksensoren (17b) an einem Kältekreis der Wärmepumpe zur Drucküberwachung im Kältekreis und/oder ein Temperatursensor (17a) am Kompressor der Wärmepumpe zur Temperaturüberwachung des Kompressors (61) angeordnet sind und mit der Sicherheitseinheit (13) zur Signalübertragung verbunden sind, und
die Sicherheitseinheit (13) dazu eingerichtet ist, in Abhängigkeit einer oder mehrerer Sensorwerte der einen oder mehreren Drucksensoren (17b) und/oder des Temperatursensors (17a), das Vorliegen eines Fehlers zu detektieren und in Abhängigkeit des Fehlers durch Übertragen und/oder Nichtübertragen eines Signals an die Steuereinheit (12) den Elektromotor (16) des Kompressors (61) mittels der Wechselrichterbrücke (11) in einen vorgegebenen Zustand zu versetzen,
**dadurch gekennzeichnet, dass** die Steuereinheit (12) dazu eingerichtet ist, wenn eine Steuerung des Elektromotors (16) durch die Regeleinheit (14) im Widerspruch zu einer Steuerung durch die Sicherheitseinheit (13) steht, den Elektromotor (16) mittels der Wechselrichterbrücke (11) gemäß der Steuerung der Sicherheitseinheit (13) zu steuern.

2. System (10) nach Anspruch 1, wobei
die Sicherheitseinheit (13) dazu eingerichtet ist, einen Ausfall einer Netzspannung während eines Feldschwächbetriebs des Elektromotors als Fehler zu detektieren, und/oder die Sicherheitseinheit eine Schnittstelle zur Übertragung von Fehlersignalen umfasst,
wobei die Sicherheitseinheit (13) dazu eingerichtet ist, bei Vorliegen eines Fehlers den Elektromotor (16) durch Übertragen und/oder Nichtübertragen eines Signals an die Steuereinheit (12) mittels der Wechselrichterbrücke (11) in einen vorgegebenen Zustand zu versetzen.

3. System (10) nach Anspruch 1 oder 2, wobei
die Sicherheitseinheit (13) dazu eingerichtet ist, Signale eines mit der Sicherheitseinheit (13) verbundenen Sensors zu analysieren, basierend auf der Analyse einen Fehler zu detektieren und bei Vorliegen eines Fehlers den Elektromotor (16) durch Übertragen und/oder Nichtübertragen eines Signals an die Steuereinheit (12) mittels der Wechselrichterbrücke (11) in einen vorgegebenen Zustand zu versetzen.

4. System nach einem der Ansprüche 1 bis 3, wobei
ein vorgegebener Zustand aus mehreren vorgegebenen Zuständen in Abhängigkeit eines oder mehrerer detektierter Fehler durch die Sicherheitseinheit (13) gewählt wird.

5. System (10) nach einem der Ansprüche 1 bis 4, wobei
das System (10) eine Recheneinheit (33) umfasst und
die Steuereinheit (12), die Sicherheitseinheit (13) und/oder die Regeleinheit (14) jeweils mittels eines Rechenkerns der Recheneinheit ausgeführt werden.

6. System (10) nach einem der Ansprüche 1 bis 5, wobei
die Steuereinheit (12), die Sicherheitseinheit (13) und die Regeleinheit (14) mittels einer Recheneinheit implementiert sind, die Recheneinheit drei Rechenkerne umfasst, wobei
die Steuereinheit (12), die Sicherheitseinheit (13) und die Regeleinheit (14) jeweils mittels eines Rechenkerns der Recheneinheit ausgeführt werden.

7. System (10) nach einem der Ansprüche 1 bis 5, wobei
die Steuereinheit (12), die Sicherheitseinheit (13) und die Regeleinheit (14) mittels einer Recheneinheit implementiert sind, die Recheneinheit zwei Rechenkerne umfasst, wobei
die Regeleinheit (14) mittels eines ersten Rechenkerns der Recheneinheit ausgeführt wird und die Steuereinheit (12) und die Sicherheitseinheit (13) gemeinsam mittels eines zweiten Rechenkerns der Recheneinheit ausgeführt werden.

8. System (10) nach einem der Ansprüche 1 bis 6, wobei
die Steuereinheit (12) eine Logikschaltung umfasst.

## Claims

1. System (10) for controlling an electric motor, wherein the system (10) includes an electric motor (16) in the form of a compressor (61) of a heat pump and/or the system is a heat pump, comprising:
- an inverter bridge (11) for transforming electrical energy for driving the electric motor (16),
- a control unit (12) for controlling the inverter bridge (11),
- a safety unit (13) for monitoring the driving of the electric motor (16),
- a regulating unit (14) for regulating the electric motor (16) by means of the control unit (12) and the inverter bridge (11),
wherein, for signal transmission, the regulating unit (14) is connected to the control unit (12) and the safety unit (13) is connected to the control unit (12),
the safety unit (13) monitors the driving of the electric motor (16) independently of the regulating unit (14),
the control unit (12) is configured to operate the electric motor (16) in a field weakening mode, and/or the electric motor (16) is configured to be operated in a field weakening mode,
one or more pressure sensors (17b) are arranged on a refrigeration circuit of the heat pump for pressure monitoring in the refrigeration circuit and/or a temperature sensor (17a) is arranged on the compressor of the heat pump for temperature monitoring of the compressor (61) and are connected to the safety unit (13) for signal transmission, and
the safety unit (13) is configured to detect the presence of a fault as a function of one or more sensor values of the one or more pressure sensors (17b) and/or of the temperature sensor (17a) and to set the electric motor (16) of the compressor (61) into a predefined state by means of the inverter bridge (11) as a function of the fault by transmitting and/or not transmitting a signal to the control unit (12),
**characterized in that** the control unit (12) is configured to control the electric motor (16) by means of the inverter bridge (11) according to the control of the safety unit (13) if a control of the electric motor (16) by the regulating unit (14) conflicts with a control by the safety unit (13).

2. System (10) according to Claim 1, wherein
the safety unit (13) is configured to detect a failure of a mains voltage during a field weakening mode of the electric motor as a fault, and/or the safety unit comprises an interface for transmitting fault signals,
wherein the safety unit (13) is configured to set the electric motor (16) into a predefined state by transmitting and/or not transmitting a signal to the control unit (12) by means of the inverter bridge (11) in the presence of a fault.

3. System (10) according to Claim 1 or 2, wherein
the safety unit (13) is configured to analyze signals of a sensor connected to the safety unit (13), to detect a fault on the basis of the analysis and to set the electric motor (16) into a predefined state by transmitting and/or not transmitting a signal to the control unit (12) by means of the inverter bridge (11) in the presence of a fault.

4. System according to one of Claims 1 to 3, wherein
a predefined state is selected from a plurality of predefined states as a function of one or more detected faults by the safety unit (13).

5. System (10) according to one of Claims 1 to 4, wherein
the system (10) comprises a computing unit (33), and
the control unit (12), the safety unit (13) and/or the regulating unit (14) are each executed by means of a computing core of the computing unit.

6. System (10) according to one of Claims 1 to 5, wherein
the control unit (12), the safety unit (13) and the regulating unit (14) are implemented by means of a computing unit, the computing unit comprises three computing cores, wherein
the control unit (12), the safety unit (13) and the regulating unit (14) are each executed by means of a computing core of the computing unit.

7. System (10) according to one of Claims 1 to 5, wherein
the control unit (12), the safety unit (13) and the regulating unit (14) are implemented by means of a computing unit, the computing unit comprises two computing cores, wherein
the regulating unit (14) is executed by means of a first computing core of the computing unit and the control unit (12) and the safety unit (13) are executed jointly by means of a second computing core of the computing unit.

8. System (10) according to one of Claims 1 to 6, wherein
the control unit (12) comprises a logic circuit.

## Revendications

1. Système (10) de commande d'un moteur électrique, le système (10) comprenant un moteur électrique (16) sous la forme d'un compresseur (61) d'une pompe à chaleur et/ou le système étant une pompe à chaleur, comprenant :
- un pont onduleur (11) pour transformer de l'énergie électrique pour commander le moteur électrique (16),
- une unité de commande (12) pour commander le pont onduleur (11),
- une unité de sécurité (13) pour surveiller la commande du moteur électrique (16),
- une unité de régulation (14) pour réguler le moteur électrique (16) au moyen de l'unité de commande (12) et du pont onduleur (11),
l'unité de régulation (14) étant reliée à l'unité de commande (12) et l'unité de sécurité (13) étant reliée à l'unité de commande (12) pour la transmission de signaux,
l'unité de sécurité (13) surveillant la commande du moteur électrique (16) indépendamment de l'unité de régulation (14),
l'unité de commande (12) étant conçue pour faire fonctionner le moteur électrique (16) dans un mode d'affaiblissement de champ, et/ou le moteur électrique (16) étant conçu pour fonctionner dans un mode d'affaiblissement de champ,
un ou plusieurs capteurs de pression (17b) étant disposés sur un circuit de réfrigération de la pompe à chaleur pour surveiller la pression dans le circuit de réfrigération et/ou un capteur de température (17a) étant disposé sur le compresseur de la pompe à chaleur pour surveiller la température du compresseur (61) et étant reliés à l'unité de sécurité (13) pour la transmission de signaux, et
l'unité de sécurité (13) étant conçue pour détecter la présence d'un défaut en fonction d'une ou de plusieurs valeurs de capteur du ou des capteurs de pression (17b) et/ou du capteur de température (17a) et pour mettre le moteur électrique (16) du compresseur (61) dans un état prédéfini au moyen du pont onduleur (11) en fonction du défaut par transmission et/ou non transmission d'un signal à l'unité de commande (12),
**caractérisé en ce que** l'unité de commande (12) est conçue pour, lorsqu'une commande du moteur électrique (16) par l'unité de régulation (14) est en conflit avec une commande par l'unité de sécurité (13), commander le moteur électrique (16) au moyen du pont onduleur (11) selon la commande de l'unité de sécurité (13).

2. Système (10) selon la revendication 1,
l'unité de sécurité (13) étant conçue pour détecter une défaillance d'une tension de réseau pendant un mode d'affaiblissement de champ du moteur électrique en tant que défaut, et/ou l'unité de sécurité comprenant une interface pour la transmission de signaux de défaut,
l'unité de sécurité (13) étant conçue pour, en présence d'un défaut, mettre le moteur électrique (16) dans un état prédéfini par transmission et/ou non transmission d'un signal à l'unité de commande (12) au moyen du pont onduleur (11).

3. Système (10) selon la revendication 1 ou 2,
l'unité de sécurité (13) étant conçue pour analyser des signaux d'un capteur relié à l'unité de sécurité (13), pour détecter un défaut sur la base de l'analyse et, en présence d'un défaut, mettre le moteur électrique (16) dans un état prédéfini par transmission et/ou non transmission d'un signal à l'unité de commande (12) au moyen du pont onduleur (11).

4. Système selon l'une quelconque des revendications 1 à 3,
un état prédéfini étant choisi parmi plusieurs états prédéfinis en fonction d'un ou de plusieurs défauts détectés par l'unité de sécurité (13).

5. Système (10) selon l'une quelconque des revendications 1 à 4,
le système (10) comprenant une unité de calcul (33) et
l'unité de commande (12), l'unité de sécurité (13) et/ou l'unité de régulation (14) étant réalisées à chaque fois au moyen d'un noyau de calcul de l'unité de calcul.

6. Système (10) selon l'une quelconque des revendications 1 à 5,
l'unité de commande (12), l'unité de sécurité (13) et l'unité de régulation (14) étant mises en œuvre au moyen d'une unité de calcul, l'unité de calcul comprenant trois noyaux de calcul,
l'unité de commande (12), l'unité de sécurité (13) et l'unité de régulation (14) étant réalisées à chaque fois au moyen d'un noyau de calcul de l'unité de calcul.

7. Système (10) selon l'une quelconque des revendications 1 à 5,
l'unité de commande (12), l'unité de sécurité (13) et l'unité de régulation (14) étant mises en œuvre au moyen d'une unité de calcul, l'unité de calcul comprenant deux noyaux de calcul,
l'unité de régulation (14) étant réalisée au moyen d'un premier noyau de calcul de l'unité de calcul et l'unité de commande (12) et l'unité de sécurité (13) étant réalisées ensemble au moyen d'un deuxième noyau de calcul de l'unité de calcul.

8. Système (10) selon l'une quelconque des revendications 1 à 6,
l'unité de commande (12) comprenant un circuit logique.
